# EUROPÄISCHE PATENTANMELDUNG

(11) **EP 2 105 227 A1**
(43) Veröffentlichungstag der Anmeldung: **30.09.2009**
(21) Anmeldenummer: 09156024.3
(22) Anmeldetag: 24.03.2009
(51) Int. Cl.: B23B 31/20, B23P 19/02, F16L 1/09, B25B 27/10

(54) **Pressvorrichtung**

(30) Priorität: 25.03.2008 CH 4342008
(71) Anmelder: Rego-Fix AG, 4456 Tenniken (CH)
(72) Erfinder: Brönnimann, Martin, 4452, Itingen (CH); Gerber, David, 4413, Büren (CH)
(74) Vertreter: Braun, André jr.

(57) **Zusammenfassung**

Pressvorrichtung zur relativen axialen Verschiebung zweier koaxial zueinander angeordneter und nur mittels hohem Pressdruck gegeneinander verschiebbarer Teile, wie beispielsweise Spannzangen oder -hülsen, in entsprechende Bohrungen von Werkzeug- bzw. Spannzangenhaltern. Die Vorrichtung besitzt ein die zu pressenden Teile koaxial umfassendes äusseres Gehäuse (3), welches entlang einer Axialebene aufklappbar ist. In das Gehäuse (3) sind Einschubhälften einsetzbar, die jeweils zwei feste Platten (10,11) mit Eingriffkanten (20) für den Eingriff an einem der zu pressenden Teile und eine axial bewegliche Pressplatte (6) mit einer Eingriffkante (20) für den Eingriff an dem zweiten zu pressenden Teil umfassen.

## Beschreibung

Die vorliegende Erfindung betrifft eine Pressvorrichtung zur relativen axialen Verschiebung zweier koaxial zueinander angeordneter und nur mittels hohem Pressdruck gegeneinander verschiebbarer Teile mit einem Gehäuse, einer im Inneren des Gehäuses axial verschiebbaren Pressplatte, einer Anzahl von ringförmig in gleichen Winkelabständen angeordneten Druckzylindern zur axialen Verschiebung der Pressplatte, einen Einschub mit koaxialen ringförmigen Eingriffkanten für den Eingriff an den zu pressenden Teilen.

Pressvorgänge dieser Art kommen beispielsweise beim Verpressen von Rohrenden oder Wellenverbindungen zur Anwendung. Hohe Pressdrücke werden benötigt, weil die Reibung einer engen Passung überwunden und in vielen Fällen eine zusätzliche Materialverformung bewirkt werden muss. Ein typisches Beispiel ist das Einpressen und Auspressen von Spannzangen oder -hülsen in entsprechende Werkzeug- bzw. Spannzangenhalter für Werkzeugmaschinen.

Für bestimmte Ausführungsformen von Werkzeugaufnahmen, insbesondere solche mit geringer oder ohne Konizität von Spannzange und Aufnahmekonus, wie sie für Maschinen mit sehr hohen Drehzahlen bevorzugt werden, können die Spannzangen oder -hülsen mit dem eingesetzten Werkzeugschaft nicht ohne weiteres in die Aufnahme des Spannzangenhalters eingeführt und mit einer Spannmutter fixiert oder umgekehrt nach Lösen der Spannmutter wieder entnommen werden, sondern müssen mit hohem Druck ein- und auch wieder ausgepresst werden. Für dieses Ein- und Auspressen gibt es verschiedene Lösungen, die aber mit Nachteilen behaftet sind.

Eine Pressvorrichtung, die diese Aufgaben erfüllt ist im Schweizer Patentgesuch Nr. 896/06 beschrieben. Um zu vermeiden, dass für jede unterschiedliche Werkzeuggrösse eine vollständige Pressvorrichtung benötigt wird, sind die Werkzeugaufnahmen als auswechselbare Einschübe gestaltet, die in eine entsprechende Ausnehmung in einem Gehäuse eingesetzt werden können. Diese Einschübe bestehen aus unteren und oberen festen Platten und durch Druckkolben dazwischen verschiebbare Pressplatten. Die festen Platten und die verschiebbaren Pressplatten besitzen Eingriffkanten für das Ansetzen an entsprechenden Nuten bzw. Flanschen an den zu verpressenden Teilen.

Ein Nachteil dieser Anordnung besteht darin, dass die Einschübe mit den Druckkolben in der Herstellung verhältnismässig aufwendig und somit teuer sind.

Der Erfindung liegt daher die Aufgabe zugrunde, eine Pressvorrichtung zu schaffen, welche die Funktion der vorstehend beschriebenen Lösung vollumfänglich erfüllt, aber einfacher und damit kostengünstiger konstruiert ist.

Erfindungsgemäss wird diese Aufgabe gelöst durch eine Pressvorrichtung der eingangs erwähnten Art, die sich dadurch auszeichnet, dass der Einschub aus zwei, zusammengesetzt eine im wesentlichen zylindrische Form bildenden Halbschalen besteht, die ihrerseits aus drei, zusammengesetzt ringförmigen koaxialen Teilen besteht, an deren Innenseiten die genannten Eingriffkanten ausgebildet sind und deren Aussenseiten mit umlaufenden Rippen versehen sind, welche in Ringnuten am Gehäuse und an der Pressplatte eingreifen.

Im Folgenden wird anhand der beiliegenden Zeichnungen eine Ein- und Auspressvorrichtung für Flachkonus-Spannzangen als bevorzugte Ausführungsform der Erfindung beschrieben. Es zeigen
- Fig. 1: eine perspektivische Darstellung einer Pressvorrichtung im geöffneten Zustand
- Fig. 2: eine entsprechende Darstellung des äusseren Gehäuses einer Pressvorrichtung ohne eingesetzten Einschub
- Fig. 3: eine perspektivische Darstellung einer bevorzugten Ausführungsform eines Einschubs, teilweise im Schnitt

In der nachfolgenden Beschreibung des in den Zeichnungen gezeigten Ausführungsbeispiels wird auf die Erwähnung von Einzelheiten, die aus dem einschlägigen Stand der Technik bekannt sind, verzichtet. Hierzu wird auf die Beschreibungen im Schweizer Patentgesuch Nr. 896/06 ausdrücklich Bezug genommen.

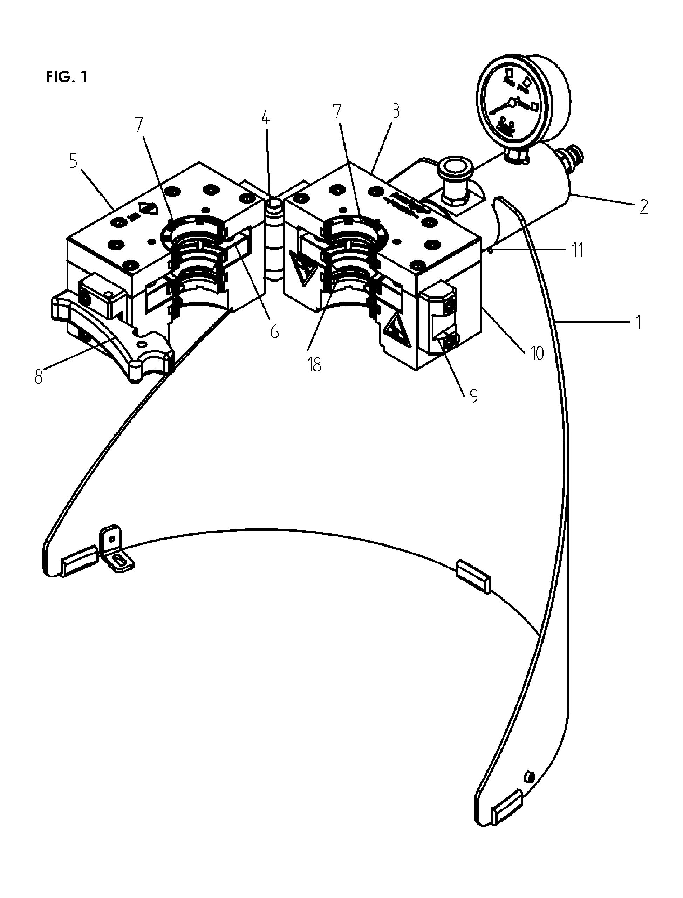

Fig. 1 zeigt die wesentlichen Teile einer Pressvorrichtung, die mittels einer Drehhalterung 2 an einem Ständer 1 angeordnet ist. Die Pressvorrichtung besitzt ein teilbares Gehäuse aus einer festen Gehäusehälfte 3 und einer ausschwenkbaren Gehäusehälfte 5. Die beiden Gehäusehälften sind durch ein Scharnier 4 miteinander verbunden. Die ausschwenkbare Gehäusehälfte ist mit einer Verschlusseinrichtung 8 ausgestattet, die im geschlossenen Zustand in ein entsprechendes Gegenstück 9 an der festen Gehäusehälfte eingreift.

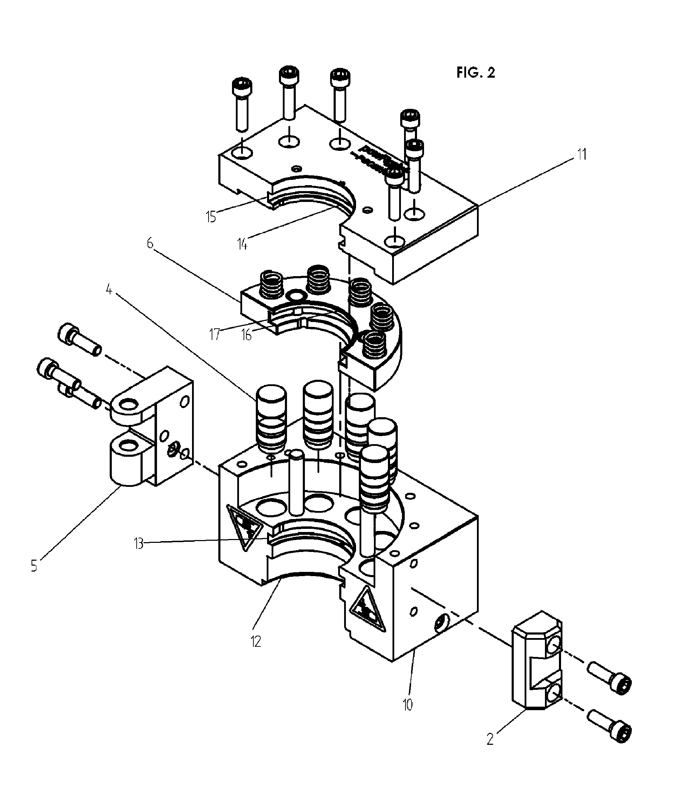

In Fig. 2 ist eine Gehäusehälfte in grösserem Massstab dargestellt. Sie besteht aus einem Unterteil 10 und einem mit diesem verschraubten Deckel 11, zwischen denen ein Innenraum gebildet ist, in welchem eine Hälfte einer axial verschiebbaren Pressplatte 6 angeordnet ist. Die Pressplattenhälften werden, wie aus dem Stand der Technik bekannt, durch Federelemente in einer Ruheposition gehalten und durch Druckkolben und Druckzylinder axial bewegt.

Das Unterteil 10 ist mit einer koaxialen, halbkreisförmigen bzw. halbzylindrischen Ausnehmung 12 versehen, in deren Innenfläche eine Nut 13 verläuft. In gleicher Weise ist sowohl der Deckel 11 mit einer entsprechenden Ausnehmung 14 und einer in ihrer Innenfläche verlaufenden Nut 15, als auch die Pressplattenhälfte 6 mit einer entsprechenden Ausnehmung 16 und einer in ihrer Innenfläche verlaufenden Nut 17 versehen. Die Nuten bilden bei geschlossenem Gehäuse mit den entsprechenden Nuten an der anderen Gehäusehälfte umlaufende Ringnuten. Die Ausnehmungen 12, 14, 16 mit den Nuten 13, 15, 17 dienen der Aufnahme entsprechend geformter Einschubhälften.

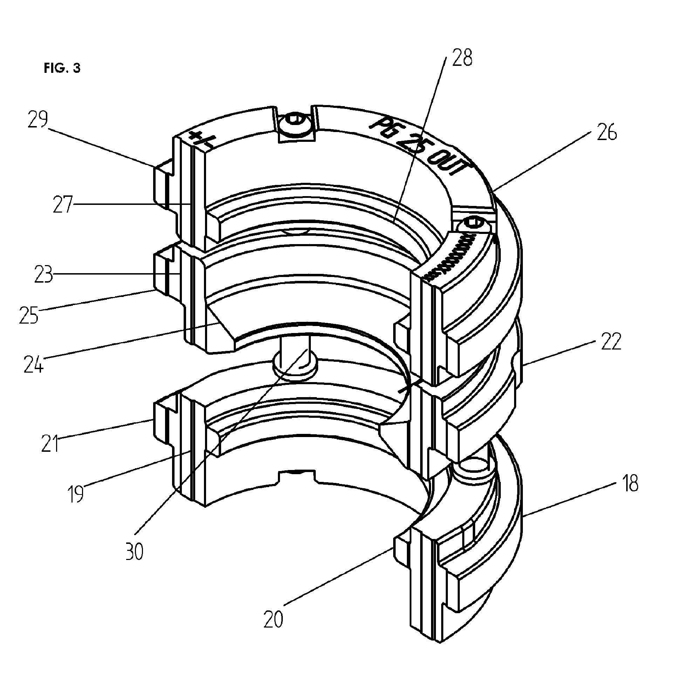

In Fig. 3 ist eine Einschubhälfte in grösserem Massstab dargestellt. Sie besteht aus drei Teilen, die hier als Ringhälften bezeichnet werden sollen, weil sie mit den jeweiligen Teilen der anderen Einschubhälfte geschlossene Ringe ergeben, wenn sie in die Gehäusehälften eingesetzt sind und das Gehäuse geschlossen ist. Die untere Ringhälfte 18 besteht aus einem zylindrischen Teil 19, einer an dessen Innenfläche umlaufenden Eingriffkante 20 und einer an der Aussenfläche umlaufenden Rippe 21. Entsprechend besteht die mittlere Ringhälfte 22 aus einem zylindrischen Teil 23, einer an dessen Innenfläche umlaufenden Eingriffkante 24, sowie einer an der Aussenfläche umlaufenden Rippe 25, und die obere Ringhälfte 26 aus einem zylindrischen Teil 27, einer an dessen Innenfläche umlaufenden Eingriffkante 28, sowie einer an der Aussenfläche umlaufenden Rippe 29.

Die obere und die untere Ringhälfte sind durch Bolzen 30 miteinander verbunden, wobei ihr axialer Abstand so bestimmt ist, dass die beiden an ihren Aussenseiten verlaufenden Rippen in die entsprechenden Nuten des Unterteils und des Deckels des Gehäuses eingreifen, wenn der Einschub in das Gehäuse eingesetzt ist. Die mittlere Ringhälfte 22 ist durch die Bolzen geführt, axial zwischen der oberen und der unteren Ringhälfte bewegbar. Ihre aussenseitige Rippe 25 greift im eingesetzten Zustand in die Nut 17 in der Ausnehmung der Pressplattenhälfte ein. Wenn also die Pressplatte durch die Druckzylinder axial verschoben wird, erfolgt zwangsläufig eine entsprechende axiale Verschiebung der mittleren Ringhälfte 22.

Zum Ein- und Auspressen von Werkzeughaltern unterschiedlicher Grösse werden Einschübe mit entsprechend passenden Innendimensionen bereitgestellt. Die äusseren Abmessungen der im Inneren verschieden grossen Einschübe sind immer gleich.

## Patentansprüche

1. Pressvorrichtung zur relativen axialen Verschiebung zweier koaxial zueinander angeordneter und nur mittels hohem Pressdruck gegeneinander verschiebbarer Teile mit einem Gehäuse, einer im Inneren des Gehäuses axial verschiebbaren Pressplatte, einer Anzahl von ringförmig in gleichen Winkelabständen angeordneten Druckzylindern zur axialen Verschiebung der Pressplatte, einen Einschub mit koaxialen ringförmigen Eingriffkanten für den Eingriff an den zu pressenden Teilen, **dadurch gekennzeichnet dass** der Einschub aus zwei, zusammengesetzt eine im wesentlichen zylindrische Form bildenden Halbschalen besteht, die ihrerseits aus drei Ringhälften bestehen, an deren Innenseiten die genannten Eingriffkanten ausgebildet sind und deren Aussenseiten mit umlaufenden Rippen versehen sind, welche in Ringnuten am Gehäuse und an der Pressplatte eingreifen.

2. Pressvorrichtung nach Anspruch 1, **dadurch gekennzeichnet, dass** Einschubhälftenpaare unterschiedlicher Grösse für das Pressen unterschiedlich grosser Teile vorgesehen sind.
